(19) Europäisches Patentamt
European Patent Office
Office européen des brevets

(11) **EP 4 491 318 A1**

(12) **EUROPEAN PATENT APPLICATION**

(43) Date of publication:
**15.01.2025 Bulletin 2025/03**

(21) Application number: **23185119.7**

(22) Date of filing: **12.07.2023**

(51) International Patent Classification (IPC):
**B23K 26/08** (2014.01)          **B23K 26/38** (2014.01)
**B23K 26/70** (2014.01)          **B23K 37/02** (2006.01)

(52) Cooperative Patent Classification (CPC):
**B23K 26/38; B23K 26/0876; B23K 26/703;
B23K 26/706; B23K 37/0235**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Bystronic Laser AG
3362 Niederönz (CH)**

(72) Inventors:
• **BERGER, Michael
3005 Bern (CH)**
• **LÜDI, Andreas
3400 Burgdorf (CH)**
• **REYNAUDO, Maxime
3362 Nierönz (CH)**

(74) Representative: **Frei Patent Attorneys
Frei Patentanwaltsbüro AG
Hagenholzstrasse 85
8050 Zürich (CH)**

(54) **FLATBED LASER CUTTING MACHINE**

(57) The present disclosure concerns a flatbed laser cutting machine (1). The flatbed laser cutting machine has a machine base and a workpiece support defining a horizontal area of support for a workpiece (5). It further comprises a laser cutting head (210) placed above the area of support and equipped to emit a laser cutting beam (3) towards a workpiece supported by the workpiece support and to be moved in horizontal directions relative to the workpiece (5) and the workpiece support. Further, it comprises a mobile protection structure (90) that underneath the area of support, the mobile protection structure being coupled to the laser cutting head to join in movements of the laser cutting head so as to protect the machine base.

Fig. 5

**Description**

The invention is in the field of flatbed laser cutting machines.

Flatbed laser cutting machines comprise a workpiece support that defines a usually horizontal area of support and thereon supports a workpiece, which may for example be a sheet or plate of a material to be cut. The flatbed laser cutting machine further comprises a laser cutting head that is equipped to emit a laser cutting beam having a direction perpendicular to the area of support. The laser cutting head is equipped to move at least in two horizontal directions relative to the workpiece support to make the desired cut.

More recently, the need for ever greater laser powers, exceeding, for example by far exceeding, 1 kW seems to be increasing strongly. However, it can be observed that only a small part of the laser light power is actually coupled into the workpiece so as to locally melt or burn workpiece material. The rest of the laser radiation is directed to other parts of the machine or its surrounding and has a potential of causing damages. Especially, the machine base, i.e., the frame and/or other parts below the workpiece and the floor underneath the flatbed laser cutting machine need to be protected from being damaged by the laser cutting beam - which is by no means a trivial task for a laser beam that is capable of cutting through workpieces of substantial thickness of for example 10 mm and more.

It is an object of the present invention to provide a flatbed laser cutting machine overcoming drawbacks of previous flatbed laser cutting machines. Especially, it is an object of the present invention to provide a flatbed laser cutting machine that has an improved protection from damages caused by unused radiation portions when operated at high powers.

This object is achieved by a flatbed laser cutting machine having a workpiece support defining a horizontal area of support for a workpiece, for example a sheet metal or a metal plate, to lie thereon. The flatbed laser cutting machine further comprises a laser cutting head equipped to emit a laser cutting beam towards a workpiece supported by the workpiece support, for example in a direction essentially perpendicular to the area of support. The laser cutting head is placed above the area of support and is equipped to be moved in horizontal directions, generally with two degrees of freedom (i.e., the laser cutting head can move in x and y directions if the z direction is defined to be the direction of the laser beam). Underneath the area of support, the laser cutting machine comprises a machine base. The flatbed laser cutting machine further comprises a mobile protection structure between the area of support and the machine base, the mobile protection structure being coupled to the laser cutting head to join in movements of the laser cutting head.

Radiation energy that impinges on the workpiece is either absorbed or reflected by the workpiece.

Only absorbed radiation can locally heat the workpiece and contribute to the cutting effect. Many materials to be cut are metals, which often have a high reflectance, whereby the portion of reflected radiation is high. One insight underlying the invention is that, for reasons explained in more detail hereinafter, the majority of the reflected radiation is reflected into a downward direction - the thicker the workpiece, the higher the portion of radiation reflected into the downward direction. Also, the thicker the workpiece is, the closer the direction into which the radiation is reflected is to the vertical. Further, the thicker the workpiece, the smaller the portion of radiation that is absorbed. Moreover, in reality, the speed by which the laser beam moves relative to the workpiece does not correspond to an ideal but is smaller than this so that a portion of the laser radiation does not interact with the workpiece at all but propagates straight downwardly.

The flatbed laser cutting machine as described in this text may be equipped for emitting a laser having a power of at least 1 kW, especially at least 5 kW or at least 10 kW.

High power laser cutting machines are especially used for cutting thick workpieces. Thus, the above insights reveal that for high power laser cutting machines, there will not only be more power, but also the share of the residual power that is unused and radiated downwardly to below the area of support is higher.

Based in this insight, the present invention proposes to protect the machine base underneath the area of support by the mobile protection structure that is coupled to the laser cutting head to join in movements of the laser cutting head.

The coupling between the laser cutting head and the mobile protection structure may be a mechanical coupling. For example, the mobile protection structure may be mechanically coupled to a bridge that moves relative to the workpiece in one horizontal dimension and relative to which the laser cutting head moves in another horizontal dimension, as explained hereinafter in more detail. In addition or as an alternative to being mechanically coupled, the mobile protection structure may be coupled to the laser cutting head in a different way. For example, the mobile protection structure may have its own drive that moves synchronously with at least some of the movements of the laser cutting head, the coupling then being a coupling implemented by electronics. Also other kinds of coupling between the laser cutting head and the mobile protection structure, for example via a hydraulic or pneumatic drive or similar, are possible.

The mobile protection structure is positioned in a path of downwards (into -z-direction, thus vertically downwards) radiated laser radiation so that it will be hit by this radiation.

By being mobile and cooperating in at least some of the movements of the laser cutting head, the mobile protection structure is not necessarily as extended as the working area but may be comparably light, and it may be suitable to be integrated in existing designs of existing flatbed laser cutting machines.

For example, the mobile protection structure may have a generally elongate shape substantially extending over a full width of the area of support with respect to one (first) horizontal dimension. The mobile protection structure then may be coupled to the laser cutting head to join in the laser cutting head's movements with respect another, second horizontal dimension orthogonal to the first horizontal dimension.

Especially, the flatbed laser cutting machine may comprise a bridge on which the laser cutting head is mounted and relative to which the laser cutting head may move in first horizontal directions (plus or minus x-directions), i.e. along a first horizontal dimension (x-dimension). The bridge as a whole is movable relative to the workpiece support in second horizontal directions (plus or minus y-directions), i.e. along a second horizontal dimension (y-dimension). This is a construction that is per se common for flatbed laser cutting machines. In accordance with embodiments, the mobile protection structure is coupled to the bridge and moves together with the bridge in the y dimensions, i.e. in the y direction or -y-direction. It may have an extension in the first horizontal dimension that may approximately correspond to the extension of the bridge in this dimension or, be more precise, to the extension of the range in which the laser cutting head may be moved on the bridge/relative to the bridge.

The mobile protection structure may comprise means for distributing heat - for example over a length of the mobile protection structure (for example referring to the first horizontal dimension) - and/or for dissipating heat.

Means for distributing heat may especially comprise a heat conductor. In an example, the mobile protection structure comprises a rod or tube extending along a horizontal dimension (the first horizontal dimension (x-dimension) in the described embodiment) and being of a first material that efficiently conducts heat, such as aluminum, steel or another efficient heat conductor. On the upper side, the mobile protection structure may comprise a second material that has a high heat resistance, such as ceramics, so that wear caused by the laser radiation is delayed as much as possible.

The latter may comprise passive cooling structures, such as cooling fins or similar. In addition or as an alternative, means for distributing heat may comprise an active cooling.

In embodiments, the mobile protection structure is a sacrificial part that may be relatively inexpensive and for example be a - possibly coated - rod-like or tube-like body, for example of aluminum or steel. The cross section of such body may be regular, for example simply round or rectangular - or may be irregular and/or optimized for cutting waste to not stick, as explained in somewhat more detail hereinafter.

At least in embodiments in which the mobile protection structure is such a - usually not actively cooled - sacrificial part, the mobile protection structure needs to be replaced every now and then. To this end, the flatbed laser cutting machine may be equipped for the mobile protection structure to be exchangeable easily, for example by providing an according mechanical interface to which the mobile protection structure is attached - such as a click-in connector, a bayonet coupling, a screw interface, etc. Such mechanical interface makes a replacement of the mobile protection structure as a low cost-replacement part easy.

In embodiments, the mobile protection structure is cooled in that the cooling installation is equipped to convey a coolant (i.e., a cooling liquid or possibly a cooling gas, thus generally a cooling fluid) to the mobile protection structure and away from it so that there is a coolant flow.

Especially, in such embodiments, the (mobile) protection structure may comprise a liquid-carrying tube that carries the coolant. The tube may lie essentially parallel to the x-axis and move with the bridge in the y-dimension.

In embodiments, such a mobile protection structure, especially extending in the first horizontal dimension, has a cross section different from circular. Especially, the cross section may be optimized for cutting waste to not stick relative to the mobile protection structure. It may for example run into an edge on the upper side (thus, a corner in cross section perpendicular to the longitudinal extension of the liquid-carrying tube. In addition or as an alternative, the horizontal dimension in cross section (the y-dimension in the above example, the cross section again being the cross section perpendicular to the longitudinal extension, for example corresponding to a cross section in the y-z plane) may be smaller than the vertical extension.

The mobile protection structure in the above-mentioned embodiments is configured to absorb residual radiation, thus radiation that was not absorbed by the workpiece-. In addition, the mobile protection structure may act to spread portions of the residual radiation that are not absorbed into the environment so that in contrast to set-ups without the mobile protection structure, there are no high concentrations of laser radiation below the workpiece support and consequently no hot spots are generated. Surface portions of the protection structure may be equipped accordingly, for example by having a chemical composition that favors absorption of radiation of the wavelength of the laser beam, and/or by having an according structure, for example an according roughness.

In addition to absorbing the residual laser radiation, the mobile protection structure may comprise reflecting surface portions directing radiation portions to absorbing elements. Such absorbing elements may - but do not necessarily need to - be placed below the area of support, too.

In embodiments that comprise active cooling by a coolant, it is possible that the heat aggregated in the coolant is used for energy recovery, for example by the coolant being in contact with a thermoelectric converter generating electricity, by the heated coolant being supplied to a thermal engine, or by a thermal contact with a secondary heat exchange fluid that is for example supplied to a heat accumulator, etc. It is also not excluded that the absorbing elements of the cooling installation are equipped to directly convert a part of the radiation energy into electrical energy, by comprising photovoltaic cells.

Hereinafter, embodiments of the present invention are described in more detail referring to drawings. In the drawings, same reference numbers refer to same or similar components. They show:

Fig. 1:          a flatbed laser cutting machine;

Fig. 2           a cross section through the workpiece at the cutting front;

Fig. 3           absorption coefficients of steel for unpolarized light as a function of the angle of incidence;

Fig. 4           a cross section corresponding to the cross section of Fig. 2 for a non-ideal situation;

Fig. 5           a flatbed laser cutting machine with a mobile protection structure for protecting the machine base;

Fig. 6           a cross section of a mobile protection structure;

Figs. 7 and 8    cross sections of liquid-carrying tubes as mobile protection structures; and

Figs. 9 and 10   cross sections of further mobile protection structures.

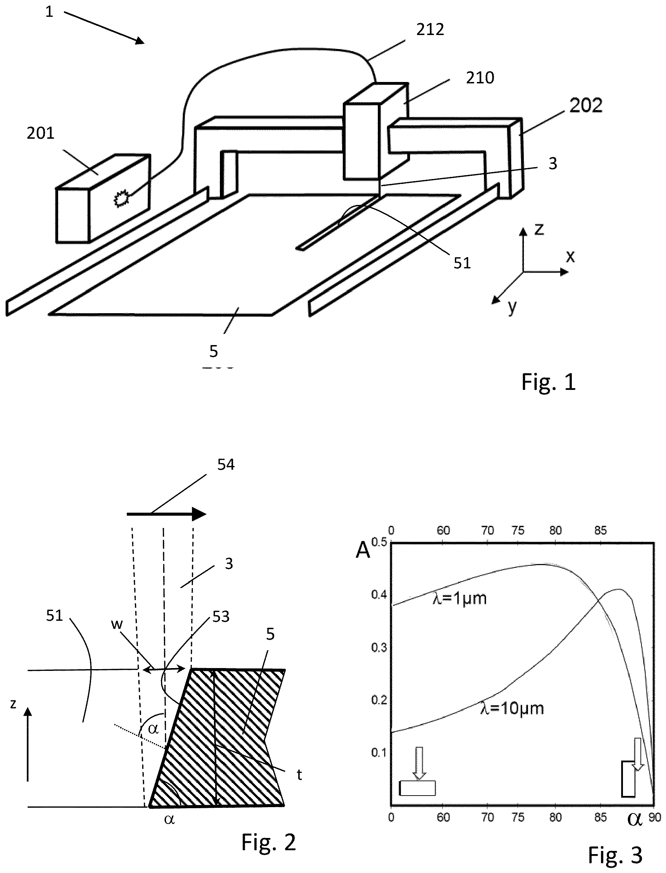

**Figure** 1 shows an example of a laser cutting machine 1. The machine comprises a laser source 201, a transport fiber 212, a laser cutting head 210, and a laser processing head moving mechanism. A workpiece 5 is supported by a workpiece support (not shown in Fig. 1). The laser cutting head moving mechanism comprises a bridge 202 relative to which the laser cutting head 210 is movable in the x dimension), and which itself is movable, for example on a pair or rails, in the y dimension relative to the working table and the workpiece 5. The laser cutting head 210 during operation emits a laser cutting beam 3 in a substantially vertical direction downwards onto the workpiece to cause a cut (kerf 51) when it is moved relative to the latter. The workpiece 5 may be a metal plate that is cut by a laser processing beam emitted by the laser cutting head.

During a laser cutting operation, movements with high velocities and high accelerations have to be made in a machining area both, in x and y directions. Movements in the y dimension involve moving the entire bridge 202 together with the head.

Even though the laser beam impinges from a direction perpendicular to the area of support (which is defined by the working table and in the depicted embodiment corresponds to the lower surface of the plate-shaped workpiece 5) and hence to the upper surface of the workpiece, the angle of incidence is much larger than 0°. **Figure** 2 illustrates the cutting front 53 as the laser cutting beam 3 moves in a cutting direction 54 relative to the workpiece 5. As can be seen from Fig. 2, the minimum angle of incidence is

$$\alpha_{min} = \tan^{-1}(t/w),$$

where t is the thickness of the workpiece and w is the width (average diameter) of the laser beam through the workpiece. For relatively thick workpieces - as are usually cut by high-power laser beams - the minimum angle becomes relatively large. For example, for a width w=200 $\mu$m and a thickness t of the workpiece between 2 mm and 20 mm, the minimum angle is between 84° and 89.5°. The maximum angle of incidence is, for geometrical reasons, 90°.

The absorption coefficient is a material property and describes how much light energy can be absorbed by the material. The degree of absorption depends on the angle of incidence, the wavelength and the polarisation, in addition to material properties. **Figure** 3 shows the approximate absorption coefficient A of steel for unpolarised (or circularly polarised) light at wavelengths of 1 and 10 $\mu$m as a function of the angle of incidence $\alpha$. Obviously, the degree of absorption at angles of incidence such as those encountered in laser cutting is small, especially at the wavelength of 1$\mu$m, and it is always less than 40%. Especially with the increasingly powerful lasers, mainly very thick materials are cut, whereby consequently only a small part of the laser power of significantly less than 10% is absorbed. The rest is reflected. According to the law of reflection and given that the cutting front 53 is close to vertical, the non-absorbed laser light shares essentially go downwards.

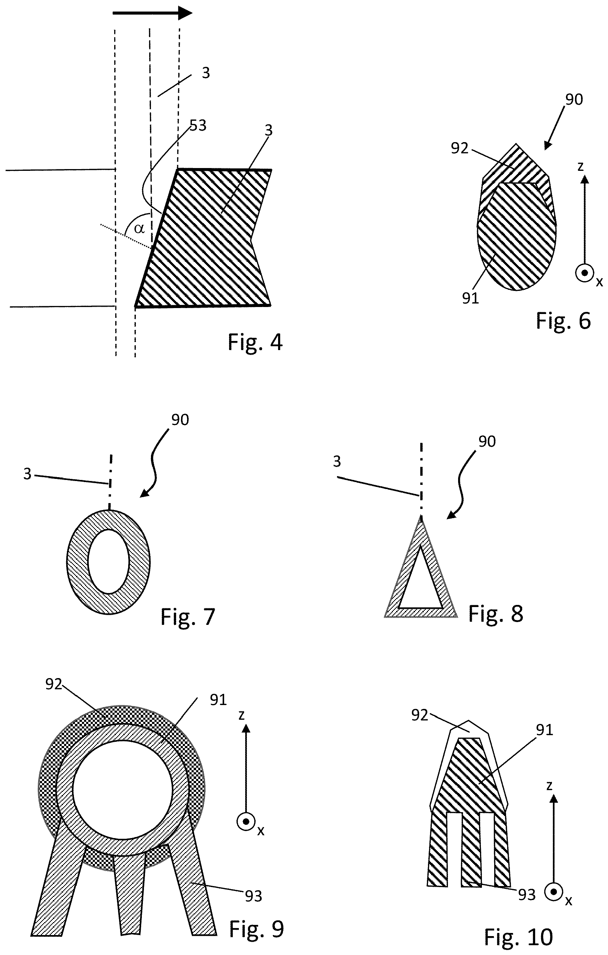

In practice, however, the minimum angle of incidence, which is theoretically optimal will not be encountered. The typical cutting process is much more like the one shown in **Figure 4,** where a share of the laser beam is radiated downwards towards the bottom without interaction with the cutting front 53 and the angle of incidence $\alpha$ is even larger than $\alpha_{min}$. This means that the energy yield available for the separation process is even lower, and that the share of radiation energy radiated downwardly from the area of support is even higher, the direction being vertical (radiation that does not interact with the workpiece) or almost vertical (radiation reflected by the cutting front), thus essentially vertical.

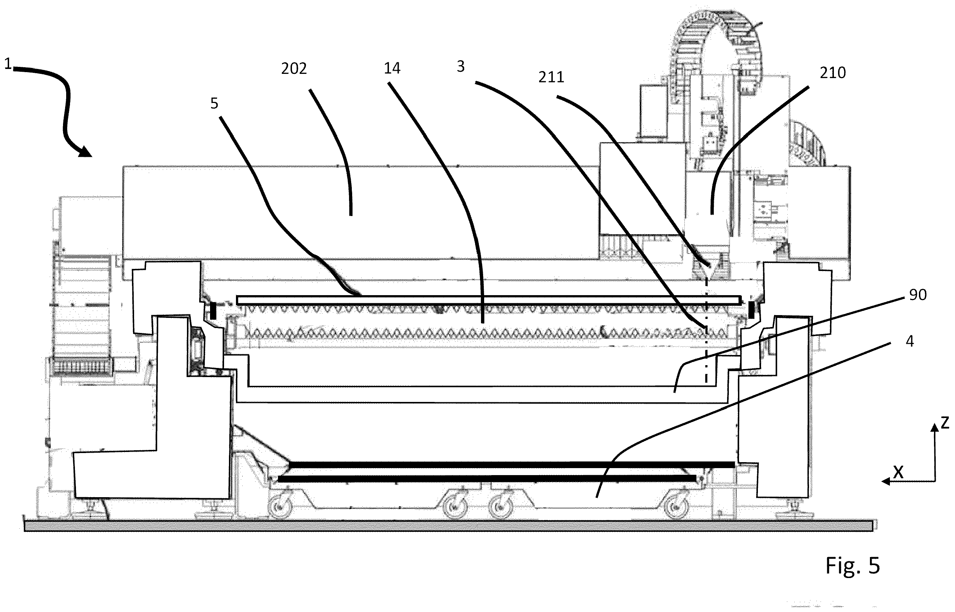

**Figure** 5 a cross-section of a flatbed laser cutting machine of the kind commonly used today for laser cutting of metal sheets. More in particular, it illustrates an embodiment of the present invention, namely a flatbed laser cutting machine 1 with a mobile protection structure.

The workpiece support is formed by a support grid 14. The support grid 14 with the workpiece 5 lies horizontally under the laser processing head 210 here illustrated with a nozzle 211 for ejecting a gas jet onto the position of incidence of the laser beam on the workpiece 5. The machine base below the support grid 14 comprises optional mobile trolleys 4 into which the cutting waste falls.

The bridge 202 (see also Fig. 1) is coupled to a mobile protection structure 90. The mobile protection structure 90 may be essentially tube-shaped or rod-shaped. It extends underneath the bridge 202, having a same y position as the bridge, and it extends along a full length of the range on which the laser cutting head 210 may be moved on the bridge 202.

In embodiments, the mobile protection structure 90 is a rod of a material that is capable of withstanding the wear caused by the impinging laser energy for at least some time and/or that is capable of conducting heat away along the length of the rod, thus in the x-dimension.

The mobile protection structure 90 may be a sacrificial part that needs to be replaced every now and then because the laser radiation may cause damages.

**Figure 6** depicts a cross section through an exemplary embodiment of a rod-like mobile protection structure 90. The structure of the embodiment of Fig. 6 deviates from the structure of a plain rod by having the following features, which can be realized independent of each other, thus individually, in combination, or in any subcombination.

- In the cross-section perpendicular to the length axis of the mobile protection structure (thus to the x-axis), the horizontal dimension (the y-dimension) is smaller than the vertical dimension (the z-dimension). This is to falling parts and other cutting waste to not stick but to fall to the bottom.

- The cross section is pointed towards the upper side, again with the purpose of preventing cutting waste from sticking to the mobile protection structure.

- The mobile protection structure comprises a body 91 of a first material, which may for example be a good heat conductor, such as aluminum, and, on the upper side, on which the radiation impinges, a coating 92 of a second material different from the first material. The second material in this may be a material that is heat resistant, such as ceramics.

Figures 7 and 8 show embodiments of the mobile protection structure 90 in which the mobile protection structure is a liquid-carrying tube capable of conducting a cooling liquid.

A cross-section of a first embodiment of a mobile protection structure 90 being a liquid-carrying tube is shown in **Figure 7.** The heat generated by the laser radiation impinging on the mobile protection structure 90 thereby can be constantly conveyed away from the position of incidence of the laser radiation. This may especially be advantageous in situations in which the x-position of the laser cutting head remains constant for a certain time during cutting (for example when a cut parallel to the x-axis is made) and/or if the heat is to be used, for example for energy recovery in the form of generation of electrical power or for heating purposes.

The features described hereinbefore referring to Fig. 6 can also be implemented in embodiments in which the mobile protection structure is not a rod but a tube, with the possibility to conduct a liquid. Fig. 9 illustrates the shape of the liquid-carrying tube to be oval/elliptical. **Figure 8** shows an alternative shape of the liquid-carrying tube, namely triangular.

**Figure 9** yet shows an embodiment in which the mobile protection structure has cooling fins 93 extending downwardly from a body of the mobile protection structure.

The cooling fins 93 in Fig. 9 are illustrated to extend parallel to the longitudinal dimension (x-dimension). However, generally, cooling fins could also extend in the y-dimension so that a movement of the mobile protection structure, being a movement in the plus or minus y-direction, causes a flow of air between the cooling fins 93. Also other shapes of surface-enhancing cooling structures are possible, for example a structure with a plurality of pin-like extensions extending downwardly.

In Fig. 9, the mobile protection structure is illustrated to have a hollow, thus tube-like body 91 of a first material, with the cooling fins being one-piece with the body and also being of the first material, and a coating 92 of a second material, similar to the embodiment of Fig. 6. A hollow-tube like structure, in contrast to rod-like structures, has the advantage of being lighter. The tube-like structure of the body 91 may optionally also be used for the mobile protection structure to serve as liquid-carrying tube for a coolant, as in the above-described embodiments, for example if the laser cutting machine is operated at high power. This, however, is not a necessity.

**Figure 10,** finally, illustrates a cross section through a mobile protection structure 90 implementing the principles described hereinbefore referring to Fig. 6 and in addition comprising cooling fins 93.

Various other embodiments may be envisaged.

**Claims**

1. A flatbed laser cutting machine (1), having a machine base and a workpiece support defining, above the machine base, a horizontal area of support for a workpiece (5), the flatbed laser cutting machine further comprising a laser cutting head (210) placed above the area of support and equipped to emit a laser cutting beam (3) towards a workpiece supported by the workpiece support and to be moved in horizontal directions relative to the workpiece (5) and the workpiece support, **characterized by** mobile protection structure (90) between the area of support and the machine base, the mobile protection structure being coupled to the laser cutting head to join in movements of the laser cutting head.

2. The flatbed laser cutting machine of claim 1, wherein the mobile protection structure is positioned below the area of support, in a path of radiation radiated by the laser cutting head (210) vertically downwards through the area of support.

3. The flatbed laser cutting machine of claim 1 or 2, wherein the mobile protection structure (90) has a generally elongate shape substantially extending over a full width of the area of support with respect to a first horizontal dimension (x), and wherein the mobile protection structure is coupled to the laser cutting head to join in the laser cutting head's movements with respect to another, second horizontal dimension (y) orthogonal to the first horizontal dimension (x).

4. The flatbed laser cutting machine of any one of the previous claims, comprising a bridge (202) on which the laser cutting head (210) is mounted and relative to which the laser cutting head is movable in a first horizontal dimension (x), the bridge being movable relative to the workpiece support in a second horizontal dimension (y) different from the first horizontal dimension, wherein the mobile protection structure is movable in the second horizontal dimension (y) together with the bridge (202).

5. The flatbed laser cutting machine of any one of the previous claims, wherein the mobile protection structure (90) comprises a rod or tube extending, underneath the area of support, along a horizontal dimension.

6. The flatbed laser cutting machine of any one of the previous claims, wherein the mobile protection structure comprises a body (91) of a first material and, at least on its side facing the laser beam, a coating (92) of a second material, wherein the second material has a higher heat resistance than the first material.

7. The flatbed laser cutting machine of claim 6, wherein the first material is a metal, such as steel or aluminum, and the second material is a ceramic.

8. The flatbed laser cutting machine of any one of the previous claims, wherein the mobile protection structure comprises passive cooling structures.

9. The flatbed laser cutting machine of any one of the previous claims, wherein the mobile protection structure comprises a liquid-carrying tube (90) for a coolant.

10. The flatbed laser cutting machine of any one of the previous claims, wherein the mobile protection structure has a cross section different from circular, wherein at least one of the following conditions holds: the cross section is pointed towards the upper side; in a cross section the horizontal dimension is smaller than the vertical dimension.

11. The flatbed laser cutting machine of any one of the previous claims being configured for the mobile protection structure being exchangeable.

12. The flatbed laser cutting machine of any one of the previous claims, wherein the mobile protection structure comprises a rod-like or tube-like body of aluminum or steel.

Fig. 1

Fig. 2

Fig. 3

Fig. 4

Fig. 6

Fig. 7

Fig. 8

Fig. 9

Fig. 10

Fig. 5

Europäisches
Patentamt

European
Patent Office

Office européen
des brevets

# EUROPEAN SEARCH REPORT

Application Number

EP 23 18 5119

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2007/028576 A2 (TRUMPF WERKZEUGMASCHINEN GMBH [DE]; GRAF DANIEL [DE]) 15 March 2007 (2007-03-15) | 1-5,8-11 | INV.<br>B23K26/08<br>B23K26/38 |
| Y | * figures 1, 3, 10, 13 *<br>* page 13, paragraph 2 *<br>* page 21, paragraph 2; claim 10 *<br>* page 14, paragraph 2 *<br>----- | 6,7,12 | B23K26/70<br>B23K37/02 |
| Y | EP 4 183 515 A1 (BYSTRONIC LASER AG [CH]) 24 May 2023 (2023-05-24)<br>* paragraphs [0044] – [0046], [0055]; claims 1, 3; figures 1,4 *<br>----- | 6,7,12 | |
| Y | US 2010/064870 A1 (OLSEN CARL C [US]) 18 March 2010 (2010-03-18)<br>* paragraphs [0006], [0021]; claim 18; figures 1,3 *<br>----- | 6,7,12 | |
| | | | TECHNICAL FIELDS SEARCHED (IPC) |
| | | | B23K<br>B26F |

The present search report has been drawn up for all claims

| Place of search | Date of completion of the search | Examiner |
|---|---|---|
| Munich | 4 December 2023 | Péridis, Marc |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

  ..........................................................................
& : member of the same patent family, corresponding document

EPO FORM 1503 03.82 (P04C01)

## EP 4 491 318 A1

### ANNEX TO THE EUROPEAN SEARCH REPORT
### ON EUROPEAN PATENT APPLICATION NO.

EP 23 18 5119

This annex lists the patent family members relating to the patent documents cited in the above-mentioned European search report.
The members are as contained in the European Patent Office EDP file on
The European Patent Office is in no way liable for these particulars which are merely given for the purpose of information.

04-12-2023

| Patent document cited in search report | | | Publication date | Patent family member(s) | | | Publication date |
|---|---|---|---|---|---|---|---|
| WO 2007028576 | A2 | | 15-03-2007 | CN | 101304834 | A | 12-11-2008 |
| | | | | EP | 1926571 | A2 | 04-06-2008 |
| | | | | JP | 5232649 | B2 | 10-07-2013 |
| | | | | JP | 2010502442 | A | 28-01-2010 |
| | | | | US | 2008230523 | A1 | 25-09-2008 |
| | | | | WO | 2007028402 | A1 | 15-03-2007 |
| | | | | WO | 2007028576 | A2 | 15-03-2007 |
| EP 4183515 | A1 | | 24-05-2023 | NONE | | | |
| US 2010064870 | A1 | | 18-03-2010 | EP | 2346653 | A2 | 27-07-2011 |
| | | | | US | 2010064870 | A1 | 18-03-2010 |
| | | | | WO | 2010033781 | A2 | 25-03-2010 |

EPO FORM P0459

For more details about this annex : see Official Journal of the European Patent Office, No. 12/82